# EUROPÄISCHE PATENTSCHRIFT

(11) **EP 2 015 907 B1**
(45) Veröffentlichungstag und Bekanntmachung des Hinweises auf die Patenterteilung: **06.01.2010**
(21) Anmeldenummer: 07711176.3
(22) Anmeldetag: 13.02.2007
(51) Int. Cl.: B27G 13/00, B27G 13/14, B23C 3/30, B29D 29/10

(54) **ROTIEREND ANTREIBBARES SCHNEID- ODER FRÄSWERKZEUG UND VERFAHREN ZUM HERSTELLEN VON ANTRIEBS- ODER FÖRDERRIEMEN**
ROTATIONALLY DRIVABLE CUTTING OR MILLING TOOL AND METHOD FOR PRODUCING DRIVING AND CONVEYOR BELTS
OUTIL ROTATIF MOTORISÉ DE COUPE OU DE FRAISAGE ET PROCÉDÉ POUR LA RÉALISATION DE COURROIES D'ENTRAINEMENT OU DE TRANSPORT

(30) Priorität: 24.02.2006 DE 102006009203
(43) Veröffentlichungstag der Anmeldung: 21.01.2009
(73) Patentinhaber: Arntz Beteiligungs GmbH & Co. KG, 37671 Höxter (DE)
(72) Erfinder: MEIER, FRANK, 37688 Beverungen (DE); BALLHAUSEN, Ulrich, 33014 Bad Driburg (DE)
(74) Vertreter: Sroka, Peter-Christian
(86) Internationale Anmeldenummer: PCT/DE2007/000258
(87) Internationale Veröffentlichungsnummer: WO 2007/095897

(56) Entgegenhaltungen:
- EP-A1- 0 050 173
- EP-A1- 0 642 886
- DE-A1- 4 115 095
- GB-A- 550 077
- JP-A- 2000 246 529
- JP-A- 2002 326 117
- US-A- 3 927 447
- US-A1- 2002 029 661

## Beschreibung

Die Erfindung betrifft ein rotierend antreibbares Schneid- oder. Fräswerkzeug gemäß dem Oberbegriff des Anspruchs 1.

Beim Schneiden oder Fräsen der Kanten und/oder Nuten von Antriebs- oder Fördernemen, und zwar insbesondere bei der Herstellung von Keilriemen, Keilrippenriemen, Rippenbändern, Zahnriemen, Flachriemen oder dergleichen, die in der Regel aus zähen oder elastischen Materialien bestehen, kommt es zur Bildung von Fähnchen oder Läppchen, die in einem anschließenden Arbeitsgang entfernt werden müssen. Dieses Problem tritt aber auch allgemein bei Bearbeitungsvorgängen auf, bei denen in der Regel gummi- oder kautschukähnliche Materialien schneidend oder fräsend bearbeitet werden.

Bei einem in der DE 41 15 095 A1 beschriebenen rotierenden Fräswerkzeug weisen alle Schneiden von der Drehachse den gleichen Abstand auf, und dieses Fräswerkzeug ist so gestaltet, dass es in beiden Drehrichtungen gleichartig verwendet werden kann. Mit einem derartigen Fräswerkzeug soll die Aufgabe gelöst werden, die Schneid- bzw. die Drehrichtung des Werkzeugkörpers frei zu wählen, ohne dass es notwendig ist, umständliche Umänderungen der Schneidmesser oder andere Manipulationen vorzunehmen, wobei in jeder Schneidrichtung ein gutes Schneidergebnis erreicht werden soll. Dadurch wird es ermöglicht, dass die Späne immer in der gleichen Richtung ausgetragen werden, wobei das Fräswerkzeug je nach Bearbeitungsablauf sowohl beim Vorschub als auch beim Rückhub Fräsarbeit leisten kann, ohne das die Qualität der bearbeiteten Flächen verringert wird.

In der aus dem Jahre 1980 stammenden EP 0 050 173 B1 der Firma MITSUBOSHI BELTING Ltd. ist ein Verfahren zum Schneiden bzw. Fräsen der Nuten von Rippenbändem beschrieben. Bei diesem Verfahren wird ein rotierend antreibbares Schneid- bzw. Fräswerkzeug verwendet, dass auf einer gemeinsamen Achse mehrere nebeneinanderliegend angeordnete Schneid- bzw. Frässcheiben mit an ihrem Umfang angeordneten Schneiden aufweist, die in der Nutenfräs-Drehrichtung wirksam sind. Das Problem des Entfernens von während des Nutenfräsens gebildeten Fähnchen oder Läppchen ist in dieser Druckschrift nicht berücksichtigt, eben so wenig wie in den weiteren hier relevanten Druckschriften.

Ein ähnliches Werkzeug ist in der aus dem Jahre 1994 stammenden EP 0 642 886 B1 ebenfalls der Firma MITSUBOSHI BELTING Ltd. beschrieben.

In der GB-A 550 077 ist ein insbesondere für die Holzbearbeitung vorgesehenes, rotierend antreibbares Schneidwerkzeug beschrieben, dessen Werkzeughalter sich gegenüberliegende Aufnahmeschlitze für Schneidzähne entweder zur Bearbeitung von Weichholz oder zur Bearbeitung von Hartholz hat. Wenn von der Weichholzbearbeitung zur Hartholzbearbeitung und umgekehrt gewechselt werden soll, müssen die Weichholzbearbeitungswerkzeuge gegen die Hartholzbearbeitungswerkzeuge ausgewechselt werden und umgekehrt.

In der US-A-2002/0,029,661 ist ein insbesondere für Dreh- und Fräsmaschinen vorgesehener, mit z.B. vier Dreh- oder Fräswerkzeugen bestückter Werkzeughalter behandelt, der um die Werkzeughalterachse in beiden Richtungen jeweils um vorgegebene Achswinkel drehbar ist., um jeweils eines der Werkzeuge in Arbeits- bzw. Einsatzposition zu bringen, während die restlichen Werkzeuge für folgende Bearbeitungsvorgänge in Wartestellung positioniert sind.

Der Erfindung liegt die Aufgabe zugrunde, sowohl von der Maschinenseite her als auch von der Verfahrensseite her bei der Herstellung von insbesondere Keilriemen, Keilrimmenriemen und dergleichen eine Vereinfachung beim Schneiden bzw. Fräsen der Riemenkanten oder Riemennuten zu schaffen, soweit es insbesondere das Problem der beim Kanten- oder Nutenfräsen sich bildenden Fähnchen oder Läppchen betrifft.

Diese Aufgabe wird mit einem Schneid- oder Fräswerkzeug gemäß Patentanspruch 1 und in entsprechender Weise mit einem Verfahren gemäß Patentanspruch 7 gelöst.

Von dem in der DE 41 15 095 A1 beschriebenen Fräswerkzeug, das in beiden Drehrichtungen gleichartig verwendet wird, unterscheidet sich das erfindungsgemäße Fräswerkzeug dadurch, dass die in den entgegengesetzten Drehrichtungen wirksamen Schneidzähne unterschiedlich ausgerichtete Schneidkanten haben, wodurch in den entgegengesetzten Drehrichtungen ungleichartige Bearbeitungsvorgänge möglich sind. Durch Antrieb des Schneidwerkzeuges in der einen Drehrichtung, die als Hauptdrehrichtung bezeichnet werden kann, erfolgt z.B. bei der Herstellung von z.B. Keilriemen, Keilrippenriemen und dergleichen, in einem ersten Arbeitsgang, dem eigentlichen Hauptbearbeitungsvorgang, das Fräsen oder Schneiden der Kanten oder Nuten, während bei Antrieb des Schneidwerkzeuges in der entgegengesetzten Richtung ein davon völlig unterschiedlicher Bearbeitungsvorgang stattfindet, nämlich das Abschneiden bzw. Abfräsen der bei dem ersten Arbeitsgang entstandenen Fähnchen oder Läppchen.

Bevorzugte Weiterbildungen sind in den Unteransprüchen 2-6 behandelt.

Die Erfindung wird im folgenden unter Bezugnahme auf die beiliegende Zeichnung näher erläutert.
Figur 1 zeigt eine Seitenansicht des als Schneid- bzw. Frässcheibe ausgebildeten Schneid- bzw. Fräswerkzeugs in Zuordnung zu einem auf eine Spanntrommel aufgewickelten, schlauchförmigen Riemenmantel;
Figur 2 zeigt ausschnittsweise im Querschnitt einen Riemenmantel bzw. Riemenwickel;
Figur 3 ist eine Schnittansicht gemäß der Linie III-III in Figur 1;
Figur 4 ist eine Schnittansicht gemäß der Linie IV-IV in Figur 1;
Figur 5 zeigt schematisiert ein Schneidwerkzeug mit mehreren nebeneinander liegenden Einzelwerkzeugen zum gleichzeitigen Schneiden bzw. Fräsen und anschließendem Nacharbeiten von mehreren nebeneinanderliegender Keilrippen.

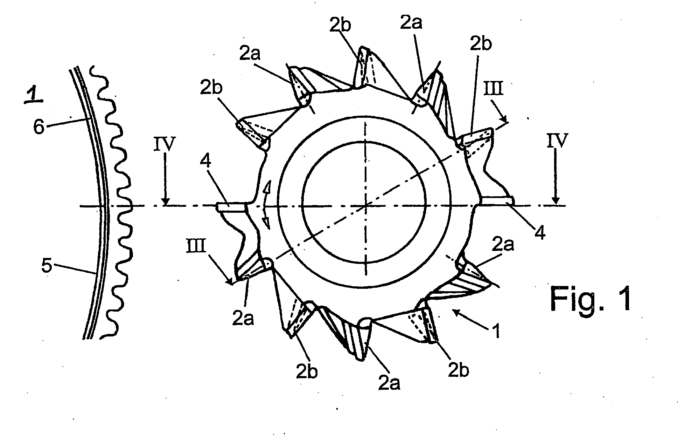

Die in den Figuren 1, 3 und 4 dargestellte Schneid- bzw. Frässcheibe 1 hat mehrere über ihren Umfang verteilte Schneidzähne 2a und 2b mit jeweils schräg stehenden Schneidflächen, wobei hier die Schneidkanten 2'a bzw. 2'b abwechselnd jeweils nur einseitig ausgebildet sind. Diese Schneidzähne 2a und 2b bilden eine erste Gruppe zum Schneiden bzw. Fräsen von Keilnuten bzw. Keilflanken von Keilriemen bzw. Keilrippenriemen. Die Schneid- bzw. Frässcheibe 1 enthält erfindungsgemäß zusätzlich z.B. zwei sich diametral gegenüberliegende Schneidzähne 4 mit achsial ausgerichteten Schneidflächen und an gegenüberliegenden Seiten der Schneid- bzw. Frässcheibe 1 befindlichen Schneidkanten 4'.

Beim Antrieb der Schneid- bzw. Frässcheibe 1 in der Haupt-Drehrichtung, d.h. bezogen auf Figur 1 in Gegenuhrzeigerrichtung, sind die Schneidzähne 2a und 2b zur Ausbildung der Keilflanken wirksam. Bei Antrieb der Scheibe 1 in Uhrzeigerrichtung sind die Schneidzähne 4 zum Entfernen von während des ersten Arbeitsganges entstehenden Fähnchen oder Läppchen wirksam.

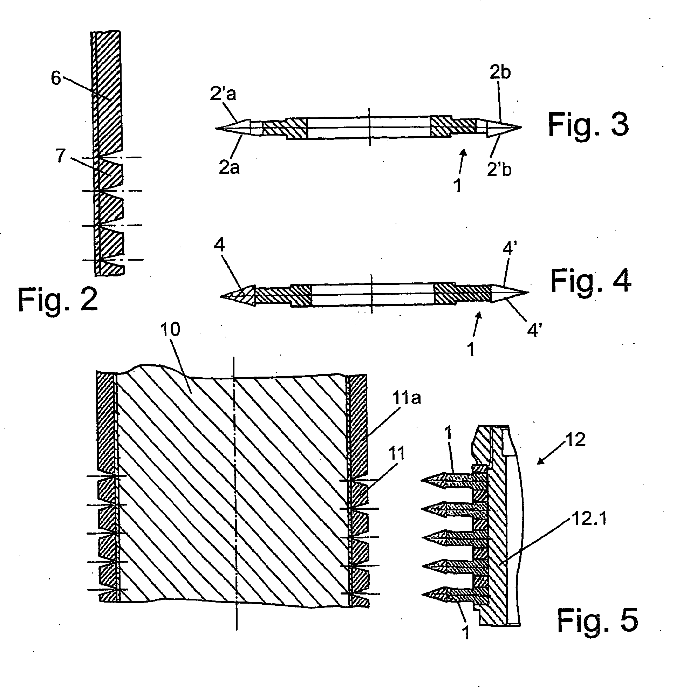

Figur 5 zeigt einen auf eine Spanntrommel 10 aufgewickelten, teilweise noch unbearbeiteten Riemenmantel 11a und teilweise bereits gefrästen Keilrippenriemen 11, der mit einem Werkzeug 12 bearbeitet worden ist, das mehrere, wie dargestellt z.B. fünf achsial nebeneinander liegende Schneid- bzw. Fräswerkscheiben 1 hat, von denen jedes mit Schneidzähnen entsprechend den Schneidzähnen 2a, 2b und 4 gemäß der in den Figuren 1, 3 und 4 dargestellten Schneidscheibe 1 ausgebildet ist. Die Schneid- bzw. Frässcheiben 1 sind auf einer Werkzeugträgerhülse 12.1 aufgespannt.

Figur 3 zeigt die erfindungsgemäße Schneid- bzw. Frässcheibe 1 in Zuordnung zu einem auf eine Spanntrommel aufgewickelten Riemenmantel 6. Figur 2 zeigt diesen Riemenmantel 6 einerseits vor und andererseits nach dem Ausbilden einzelner Keilriemen bzw. Keilrippen 7.

## Patentansprüche

1. Rotierend antreibbares Schneid- oder Fräswerkzeug zur Herstellung von Antriebs- oder Förderriemen, insbesondere für die Herstellung von Keilriemen, Keilrippenriemen, Rippenbändern, Zahnriemen, Flachriemen oder dergleichen, bestehend aus einer an ihrem Umfang mit Schneidzähnen bestückten rotatorisch antreibbaren Scheibe (1), **dadurch gekennzeichnet, dass** die Scheibe (1) mindestens einen in der einen Drehrichtung wirksamen Schneidzahn und mindestens einen in der anderen Drehrichtung wirksamen Schneidzahn aufweist, und dass die in den entgegengesetzten Drehrichtungen wirksamen Schneidzähne (2a; 2b bzw. 4) zur Durchführung unterschiedlicher Bearbeitungsprozesse unterschiedlich ausgerichtete Schneidkanten haben.

2. Schneid- bzw. Fräswerkzeug nach Anspruch 1, **dadurch gekennzeichnet, daß** jeder in der einen Drehrichtung wirksame Schneidzahn (2a bzw. 2b) eine in Drehrichtung schräg stehende Schneidfläche (2'a bzw. 2'b) aufweist, während jeder in der entgegengesetzten Drehrichtung wirksame Schneidzahn (4) eine in Drehrichtung axial ausgerichtete Schneidfläche (4') hat.

3. Schneid- bzw. Fräswerkzeug nach Anspruch 2, **dadurch gekennzeichnet, dass** jeder Schneidzahn (4) zwei Schneidkanten (4') aufweist, die an den axial gegenüberliegenden Seiten des als Scheibe (1) ausgebildeten Werkzeugs liegen.

4. Schneid- bzw. Fräswerkzeug nach Anspruch 2 oder 3 **gekennzeichnet durch** zwei sich diametral gegenüberliegende Schneidzähne (4).

5. Schneid- bzw. Fräswerkzeug nach einem der Ansprüche 1 bis 4, **dadurch gekennzeichnet, dass** jeder Schneidzahn (4) eine axial ausgerichtete Schneidfläche mit beidseitig wirksamen Schneidkanten (4') aufweist.

6. Schneid- bzw. Fräswerkzeug nach einem der Ansprüche 2 bis 5, **dadurch gekennzeichnet, dass** es mehrere Schneidzähne (2a; 2b) aufweist, deren Schneidkanten (2'a bzw. 2'b) abwechselnd auf entgegengesetzten Seiten benachbarter Schneidzähne angeordnet sind.

7. Verfahren zum Schneiden und/oder Fräsen von Kanten und/oder Nuten bei der Herstellung von Antriebs- und Förderriemen, insbesondere bei der Herstellung von Keilriemen, Keilrippenriemen, Rippenbändern, Zahnriemen, Flachriemen oder dergleichen, **dadurch gekennzeichnet, dass** man mit einem rotierend antreibbaren Schneid- oder Fräswerkzeug gemäß einem der Ansprüche 1 bis 6 in einem ersten Arbeitsschritt beim Schneiden und/oder Fräsen der Kanten und/oder Nuten das Schneid- oder Fräswerkzeug in einer solchen Drehrichtung antreibt, dass jeder Schneidzahn mit in Drehrichtung schräg stehender Schneidfläche wirksam ist, und dass man in einem zweiten Arbeitsschritt zum Entfernen von während des ersten Arbeitsschrittes entstandenen Fähnchen oder Rippchen das Schneid- oder Fräswerkzeug in entgegengesetzter Drehrichtung antreibt, derart, dass jeder Schneidzahn mit axial ausgerichteter Schneidfläche wirksam ist.

## Claims

1. A rotary driven cutting or milling tool for the manufacture of driving belts or conveyor belts, in particular for the manufacture of V-belts, V-ribbed belts, ribbed belts, toothed belts, flat belts or the like, said tool comprising a rotary driven disk (1) provided with cutting teeth on its periphery, **characterized in that** the disk (1) has at least one cutting tooth working in one direction of rotation and at least one cutting tooth working in the other direction of rotation, **and in that** the cutting teeth (2a; 2b or 4) working in opposite directions of rotation have differently oriented cutting edges for performing different machining processes.

2. A cutting or milling tool according to Claim 1, **characterized in that** each cutting tooth (2a or 2b) working in one direction of rotation has a cutting surface (2'a or 2'b) inclined in direction of rotation, whilst each cutting tooth (4) working in the opposite direction of rotation has a cutting surface (4') axially aligned in direction of rotation.

3. A cutting or milling tool according to Claim 2, **characterized in that** each cutting tooth (4) has two cutting edges (4') located on axially opposite sides of the tool formed as a disk (1).

4. A cutting or milling tool according to Claim 2 or 3 **characterized by** two cutting teeth (4) located diametrically opposite one another.

5. A cutting or milling tool according to one of Claims 1 to 4, **characterized in that** each cutting tooth (4) has an axially aligned cutting surface with cutting edges (4') working on both sides.

6. A cutting or milling tool according to one of Claims 2 to 5, **characterized in that** it has a number of cutting teeth (2a; 2b), the cutting edges (2'a or 2'b) of which are provided alternately on opposite sides of adjacent cutting teeth.

7. A method of cutting and/or milling edges and/or slots when manufacturing driving belts and conveyor belts, in particular when manufacturing V-belts, V-ribbed belts, ribbed belts, toothed belts, flat belts or the like, **characterized in that** with a rotary driven cutting or milling tool according to one of Claims I to 6, in a first working step when cutting and/or milling the edges and/or slots, the cutting or milling tool is driven in such a direction of rotation that each cutting tooth works with its cutting surface inclined in direction of rotation, **and in that** in a second working step for removing small burrs or fins produced during the first working step, the cutting or milling tool is driven in the opposite direction of rotation in such a way that each cutting tooth works with axially aligned cutting surface.

## Revendications

1. Outil de coupe ou de fraisage à entraînement rotatif pour la fabrication de courroies de transmission ou de transport, en particulier pour la fabrication de courroies trapézoïdales, de courroies trapézoïdales à nervures, de bandes à nervures, de courroies dentées, de courroies plates ou similaires, ledit outil étant constitué d'un disque (1) à entraînement rotatif pourvu sur son pourtour de dents coupantes, **caractérisé en ce que** le disque (1) présente au moins une dent coupante efficace dans un sens de rotation et au moins une dent coupante efficace dans l'autre sens de rotation et **en ce que** les dents coupantes (2a ; 2b ou 4) efficaces dans les sens de rotation opposés ont des arêtes de coupe orientées différemment pour réaliser différents processus de traitement.

2. Outil de coupe ou de fraisage à entraînement rotatif selon la revendication 1, **caractérisé en ce que** chaque dent coupante (2a ou 2b) efficace dans un sens de rotation présente une surface de coupe (2'a ou 2'b) se trouvant en oblique dans le sens de rotation, tandis que chaque dent coupante (4) efficace dans le sens de rotation opposé possède une surface de coupe (4') orientée axialement dans le sens de rotation.

3. Outil de coupe ou de fraisage selon la revendication 2, **caractérisé en ce que** chaque dent coupante (4) présente deux arêtes de coupe (4'), qui se situent sur les côtés axialement opposés de l'outil conformé en disque (1).

4. Outil de coupe ou de fraisage selon la revendication 2 ou 3, **caractérisé par** deux dents coupantes (4) diamétralement opposées.

5. Outil de coupe ou de fraisage selon l'une quelconque des revendications 1 à 4, **caractérisé en ce que** chaque dent coupante (4) présente une surface de coupe orientée axialement avec des arêtes de coupe (4') efficaces des deux côtés.

6. Outil de coupe ou de fraisage selon l'une quelconque des revendications 2 à 5, **caractérisé en ce qu'**il présente plusieurs dents coupantes (2a ; 2b), dont les arêtes de coupe (2'a ou 2'b) sont aménagées alternativement sur les côtés opposés de dents coupantes voisines.

7. Procédé pour la coupe et/ou le fraisage d'arêtes et/ou de rainures lors de la fabrication de courroies de transmission et de courroies de transport, en particulier lors de la fabrication de courroies trapézoïdales, de courroies trapézoïdales à nervures, de bandes à nervures, de courroies dentées, de courroies plates ou similaires, **caractérisé en ce que**, avec un outil de coupe ou de fraisage à entraînement rotatif selon l'une quelconque des revendications 1 à 6, on entraîne, dans une première étape de travail lors de la coupe et/ou du fraisage des arêtes et/ou des rainures, l'outil de coupe ou de fraisage dans un sens de rotation tel que chaque dent coupante soit efficace avec une surface de coupe se trouvant en oblique dans le sens de rotation, et **en ce que** l'on entraîne l'outil de coupe ou de fraisage dans le sens de rotation opposé dans une seconde étape de travail pour éliminer de petites barbes ou de petites nervures formées pendant la première étape de travail, de sorte que chaque dent coupante soit efficace avec une surface de coupe orientée axialement.
